# EUROPEAN PATENT SPECIFICATION

(11) **EP 4 391 838 B1**
(45) Date of publication and mention of the grant of the patent: **01.10.2025**
(21) Application number: 22765103.1
(22) Date of filing: 16.08.2022
(51) Int. Cl.: A24B 3/14, A24D 1/18, A24F 40/20, A61M 15/00

(54) **BIODEGRADABLE CARTRIDGE FOR AN AEROSOL-GENERATING DEVICE**
BIOLOGISCH ABBAUBARE PATRONE FÜR EINE AEROSOLERZEUGUNGSVORRICHTUNG
CARTOUCHE BIODÉGRADABLE POUR UN DISPOSITIF DE GÉNÉRATION D'AÉROSOL

(30) Priority: 23.08.2021 EP 21192511
(43) Date of publication of application: 03.07.2024
(73) Proprietor: Philip Morris Products S.A., 2000 Neuchâtel (CH)
(72) Inventor: CALI, Ricardo, 68163 Mannheim (DE)
(74) Representative: Abitz & Partner
(86) International application number: PCT/EP2022/072822
(87) International publication number: WO 2023/025618

(56) References cited:
- EP-A1- 3 782 481
- EP-A1- 3 782 481
- WO-A1-2020/089090
- WO-A1-2020/089090
- WO-A1-2020/142004
- WO-A1-2020/142004
- US-A1- 2015 367 366
- US-A1- 2015 367 366

## Description

The present disclosure relates to a biodegradable cartridge for an aerosol-generating device. The present disclosure further relates to an aerosol-generating system comprising an aerosol-generating device and a biodegradable cartridge.

It is known to provide an aerosol-generating device for generating an inhalable vapor. Such devices may heat a solid or liquid aerosol-forming substrate without burning the aerosol-forming substrate.

Aerosol-generating devices that utilize liquid aerosol-forming substrate are also referred to as vaporizers. A vaporizer may have a cylindrical shape and may comprise a cartridge, a heater, and a main body which includes a power resource and a control board. The heater may comprise a porous element and a heating unit attached to the heated substrate to transfer heat. Further, the porous element may be configured to transfer the liquid aerosol-forming substrate from the cartridge towards the heating unit.

The cartridge may be configured as a replaceable cartridge. When the replaceable cartridge is consumed, a new cartridge is to be inserted into the vaporizer. Typically, a consumed cartridge is discarded into trash cans or returned to the suppliers. Due to hygiene consideration and material characteristics most of the used cartridges end as garbage in a landfill.

New cartridges may comprise sealing elements which protect portions of the cartridge from contamination. Before using a new replaceable cartridge, such sealing parts are to be peeled up and are discarded as well. An accumulated quantity of the discarded cartridges and the discarded sealing elements may impact the ecosystem.

US 2015/367366 A1 relates to aerosolized particles and devices for the containment, aerosolization, and/or delivery thereof.

EP 3 782 481 A1 discloses a consumable for a smoking substitute system and a method of forming an aerosol-forming substrate of the consumable.

WO 2020/089090 A1 provides an aerosol-forming article, which comprises solely biodegradable materials.

WO 2020/142004 A1 discloses a heatable tobacco product, a tobacco unit for use with the heatable tobacco product and a method for producing the tobacco unit.

It would be desirable to provide a replaceable cartridge for an aerosol-generating device, which reduces the environmental impact after being used.

It would further be desirable to provide a replaceable cartridge for an aerosol-generating device, which contributes to sustainable development of the environment.

According to an embodiment of the invention there is provided a cartridge for an aerosol-generating device comprising a container configured to hold sensorial media. The cartridge is made from biodegradable material and comprises a plant seed. The plant seed is germinable.

When a cartridge of the present invention is thrown away after use, the cartridge material will biologically degrade such that the impact on environmental pollution is reduced.

The cartridge further comprises a plant seed. The cartridge may comprise a plurality of plant seed. The cartridge may comprise a variety of plant seeds.

The plant seed may have flavoring properties. A plant seed having flavoring properties may allow to flavor an aerosol generated in an aerosol-generating system. For this purpose the plant seed may be located within an airflow or aerosol flow path within the aerosol-generating device.

. A cartridge which is made from biodegradable material and which additionally comprises a germinable plant seed is advantageous for at least two reasons. As mentioned above, a discarded cartridge made from biodegradable material reduces environmental pollution. In addition, the seed may germinate after disposal. Thus, with each disposal of the cartridge of the present invention a new plant or tree is sowed. Thus, disposal of a cartridge of the present invention may actually positively impact the ecosystem.

Any type seeds that are considered suitable may be used with the present invention. Seeds that are available in large quantities and that exist as commodity in the market may be used. The seeds may be selected from one or more of: seeds of sparagales, seeds of monocotyledonous flowering plants, including as orchid plants (Orchidaceae), cymbidium orchid (brachiopod), seeds of pimpinella anisum, seeds of illicium verum, seeds of foeniculum vulgaris, seeds of calendula officinalis, seeds of anthemis tomentosa and seeds of anthriscus cerefolium.

The material of the cartridge may be selected from any suitable biodegradable material known in the art. The biodegradable material of the cartridge may be selected from one or more of biodegradable plastics, polylactic acid (PLA), polyhydroxyalkanoate (PHA), polysaccharide derivatives, and poly(amino) acid.

The plant seed may be provided in such way that after disposal the used biodegradable cartridge may function as a plant pot. The biodegradable cartridge may store water to enhance germination of the seed. The used cartridge may be buried into the ground and be decomposed.

The cartridge may be designed to define an airflow channel. The cartridge may have a tubular shape defining an airflow channel. The airflow channel may extend centrally through the cartridge.

As used herein the terms airflow path or air flow channels are used to generally refer to a path or a channel along which gaseous components are guided through an aerosol-generating device. The gaseous components may comprise air and aerosol or any mixture of air and aerosol.

The plant seed may be provided at the outside of the container defined by the cartridge. Providing the seed at the outside of the container may allow to contact the plant seed with an aerosol generated in the aerosol-generating device.

The plant seed may be adhered to the cartridge by any suitable means. The plant seed may be adhered to the cartridge by an adhesive or any other fixation means.

The plant seed may be provided in an herbal sheet. The herbal sheet may comprise an adhesive layer and a flavor layer.

The adhesive layer may comprise a suitable adhesive material for fixing the flavor layer to the cartridge. The adhesive material may comprise organic adhesives such as cyanoacrylate, epoxy, acrylic, anaerobic, and UV curable acrylates. The adhesive material may comprise inorganic based adhesives such as ceramic threadlockers and silicone-based adhesive. The adhesive material may comprise biodegradable materials, such as starch or polysaccharides. These adhesive materials show thermal resistance to the temperature ranges of the generated aerosol. Thus, by using these adhesive materials continued operation of the cartridge in a heated aerosol-generating device is ensured.

Varieties of biodegradable starch-based polymers include thermoplastic starch, starch synthetic aliphatic polymer blends, starch-polybutylene succinate (PBS)/polybutylene succinate adipate (PBSA) polyester blends and starch-ethylene vinyl alcohol (EVOH) or polyvinyl alcohol (PVOH) blends.

The adhesive material may comprise polyvinyl alcohol (PVOH). The adhesvie material may comprise any of linseed oil and castor oil. The adhesive material may comprise biodegrable polyesters, such as aliphatic (linear) polyester and aromatic (ring structure) polyesters. The adhesive material may comprise lactic acid or polylactic acid (PLA), or polycaprolactone (PCL) polyester.

The adhesive material may comprise any combination of the above mentioned adhesive materials.

The plant seed may be provided in the herbal sheet either in the adhesive layer, in the flavor layer or in both, the adhesive layer and the flavor layer.

The flavor layer may comprise flavorant and may be used to flavor the air flow or the generated aerosol within the aerosol-generating device.

The flavor layer may comprise a wax or a gum. The flavor layer may be selected from one or more of: tamarind seed gum, locust bean gum from plant seeds, gum arabic and karaya gum from sap, or konjac mannan and soy polysaccharides containing cellulose and agarose (as main components from other plants).

The herbal sheet as described above may be specifically designed to have a higher flavoring capability than plant seeds. Thus, by using the herbal sheet of the invention the overall flavoring capability may be enhanced.

The herbal sheet may be provided in the airflow channel defined by the cartridge. Exposing the herbal sheet to the air or the aerosol flow in the central airflow channel of the cartridge may allow the volatile flavorants to be readily mixed with the passing air flow. The herbal sheet remains in the cartridge during and after use. Upon disposal on the cartridge, the plant seed comprised in the herbal sheet may germinate to contribute to the ecosystem.

The herbal sheet may be configured as a sealing layer fixed to the cartridge. In this regard, the herbal sheet may be configured as a sealing layer for sealingly closing at least one end of the airflow channel defined by the cartridge. It may be desirable for hygienic purposes to sealingly close one or both ends of the cartridge, to avoid contamination of the internal air flow channel of the cartridge prior to use. Such sealing layers are removed before use and may be disposed into the environment. Since the herbal sheet of the sealing layer comprises one or more plant seeds, each disposal of such sealing layers may lead to a new plant or tree to be sowed. Thus, disposal of a sealing layer may positively impact the ecosystem.

The sealing layer may be formed from a biodegradable material. The sealing layer may be formed from one of paper, biofilm and fiber-based materials.

The cartridge may be composed from two or more components. Such more component cartridge, which is also referred to as 'cartridge assembly', may comprise a seed holder and a main piece.

The seed holder may comprise the plant seed. The plant seed may be comprised in an herbal sheet adhered to the seed holder.

The main piece may define the container for holding the liquid aerosol-forming substrate. When assembled, the main piece and the seed holder may define an air flow channel through the cartridge. The seed holder and the main piece may be assembled in such way that the plant seed or the herbal sheet comprising the plant seed is located in the air flow channel. In this way again the seed or the herbal sheet is exposed to the air flow in the central airflow channel of the cartridge and may allow the volatile flavorants to be readily mixed with the passing air flow.

The seed holder may include the complete container section of the cartridge and may be the only part that is configured for storing the liquid aerosol-forming substrate. In such embodiment, the seed holder may be configured to be disposed of after the stored liquid aerosol-forming substrate is used up, while the main piece may be continued to be used together with a fresh seed holder.

Constructing the cartridge from two or more parts may offer several advantages. The different parts can be used to fulfill the different functions of the cartridge. Either the main piece or the seed holder may include the complete container section of the cartridge and may be the only part that is configured for storing the liquid aerosol-forming substrate. The seed holder may be configured to hold the plant seed or the herbal sheet. Such distribution of functionalities to the individual components of the cartridge may facilitate manufacture and construction of the cartridge.

In order to allow the seed holder to expose the plant seed or the herbal sheet comprising the plant seed in the air flow channel, the main piece may be configured to form an air flow channel, having a lateral aperture. The seed holder may be configured to have a corresponding protruding portion that may extend into the lateral opening of the air channel defined by the main piece. Upon assembly of the main piece and the seed holder a front face of the protruding portion of the seed holder may be flush with an inner wall of the main piece defining the air flow channel.

The main piece may be shaped to define a docking portion comprising a recess that is configured for receiving the seed holder. The docking portion may be provided with guiding elements to facilitate the insertion of the seed holder. A pair of guiding elements may be arranged on the docking portion of the main piece and the seed holder so that the seed holder may be accurately inserted into the main piece at a predetermined position.

The seed holder and the main piece may be connected by suitable connection means. The connection means may comprise a unique complimentary engaging structure. This engaging structure may comprise one or more of: restraint grooves, clamping elements, spring elements, protrusions, and indentations that match a counterpart engagement element. The engaging structure may be shaped according to a key-and-lock principle. During assembly, the two matching counterparts of the engaging structures of the main piece and the seed holder engage with each other and limit relative sideward movement of the two parts. Several engaging structures may be used to restrict movement of the seed holder in any direction while attached to the main piece.

The main piece may include a spring mechanism that may provide a force against an indentation of the seed holder and that may maintain the seed holder in its engaged position. The spring mechanism may comprise an outwardly protruding portion that contacts a surface of the seed holder, thus creating retaining friction.

The seed holder may comprise a friction element to facilitate the disengagement from the docking portion of the main piece. The friction arrangement may comprise a high friction material provided at the surface of the seed holder. The friction arrangement may comprise a series of parallel channel indentations embedded at the surface of the seed holder. Such a friction element allows sufficient grip for the user to unlock the mechanical engagement features and to release the seed holder from its engaged position within the main piece.

After the liquid aerosol-forming substrate or the flavor layer in the replaceable cartridge is completely consumed, the seed holder may be separated from the main piece, thereby exposing the plant seed or the herbal sheet comprising the plant seed. After separation the seed holder may act as a plant pot, to let the plant seed eventually germinate.

The cartridge may be provided in the form of an aerosol-generating article to be used with an aerosol-generating device. The aerosol-generating article may comprise a sensorial media portion and a mouthpiece portion being connected by a wrapper.

The aerosol-generating article may comprise one or more additional components selected from a hollow acetate tube and a front plug and wherein the plant seed is provided at one or more of the additional components.

The aerosol-generating article may comprise a porous front plug, a sensorial media portion, a hollow acetate tube and a mouthpiece which are connected in this sequence by one or more plug wraps or tipping papers.

The porous front plug may be made of acetate tow and may comprise one or more plant seeds distributed along the length of the front plug.

The sensorial media portion may be configured for being heated by a heating element. If inductive heating is used, the sensorial media portion may comprise a susceptor for inductively heating the sensorial media portion.

The hollow acetate tube may also comprise one or more plant seeds distributed along the length of the hollow acetate tube.

Upon insertion of the aerosol-generating article in an electrically heated aerosol-generating device, the sensorial media portion may be heated to produce an aerosol. If a user draws a puff, an airflow is provided, which enters the aerosol-generating article at the porous plug, and mixes with the emanated scent of the seeds contained in the porous plug. The air flow heated and is mixed with vaporized substrate in the sensorial media portion to form a heated aerosol. This heated aerosol is again blended with the scents of the seeds comprised in the hollow acetate tube. The aerosol exits the aerosol-generating article at the downstream end of the mouthpiece. By guiding the airflow twice along a portion comprising plant seeds, an increased flavoring of the aerosol is achieved.

As used herein, the term 'aerosol-forming substrate' relates to a substrate capable of releasing one or more volatile compounds that can form an aerosol. Such volatile compounds may be released by heating the aerosol-forming substrate. An aerosol-forming substrate may conveniently be part of an aerosol-generating article.

The aerosol-forming substrate may be a solid aerosol-forming substrate. The aerosol-forming substrate may comprise both solid and liquid components. The aerosol-forming substrate may comprise a tobacco-containing material containing volatile tobacco flavour compounds which are released from the substrate upon heating. The aerosol-forming substrate may comprise a non-tobacco material. The aerosol-forming substrate may comprise an aerosol former that facilitates the formation of a dense and stable aerosol. Examples of suitable aerosol formers are glycerine and propylene glycol.

The aerosol-forming substrate may be provided in a liquid form. The liquid aerosol-forming substrate may comprise an aerosol former such as propylene glycol or glycerine, and other additives and ingredients, such as flavourants. The liquid aerosol-forming substrate may comprise water, solvents, ethanol, plant extracts and natural or artificial flavours. The liquid aerosol-forming substrate may comprise nicotine. The liquid aerosol-forming substrate may have a nicotine concentration of between about 0.5% and about 10%, for example about 2%. The liquid aerosol-forming substrate may be contained in a liquid storage portion of the aerosol-generating article, in which case the aerosol-generating article may be denoted as a cartridge.

The cartridge may be configured to be detachably connectable to an aerosol-generating device.

As used herein, an 'aerosol-generating device' relates to a device that interacts with an aerosol-forming substrate to generate an aerosol. The aerosol-forming substrate may be part of an aerosol-generating article or may be comprised in a cartridge. The aerosol-generating device may comprise a housing, electric circuitry, a power supply, a heating chamber and a heating element.

The electric circuitry may comprise a microprocessor, which may be a programmable microprocessor. The microprocessor may be part of a controller. The electric circuitry may comprise further electronic components. The electric circuitry may be configured to regulate a supply of power to the heater element.

The invention is also directed to an aerosol-generating system, comprising an aerosol-generating device and a cartridge as described above.

Features described in relation to one embodiment may equally be applied to other embodiments of the invention.

The invention will be further described, by way of example only, with reference to the accompanying drawings in which:
Fig. 1 shows a cartridge comprising an herbal sheet in the airflow channel;
Fig. 2 shows a cartridge comprising an herbal sheet configured as sealing layer;
Fig. 3 shows a cartridge assembly;
Fig. 4 shows a main piece of a cartridge assembly;
Fig. 5 shows a seed holder of a cartridge assembly;
Fig. 6 illustrates germination of a plant seed comprised in a seed holder;
Fig. 7 shows an aerosol-generating article comprising plant seeds.

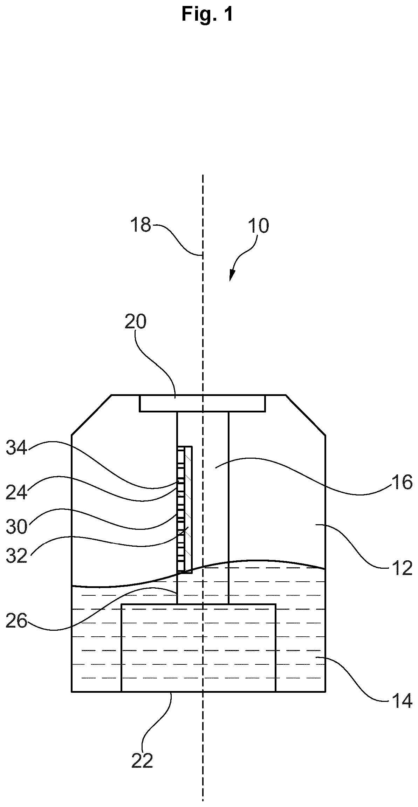

In Fig. 1 a cartridge 10 according to the present invention is depicted. The cartridge 10 is configured to be replaceable and is made from biodegradable polylactic acid. The replaceable cartridge 10 assembly has a generally tubular shape and defines a container portion 12 for holding liquid aerosol-forming substrate 14. An air flow channel 16 extends centrally through the cartridge 10 along its longitudinal axis 18. The proximal end of the airflow channel 16 is adopted as an outlet 20 and the distal end of the airflow channel 16 is adopted as an inlet 22, which is configured to receive an aerosol from the upstream vaporizing unit of an aerosol-generating device (not depicted).

An herbal sheet 24 is arranged in the airflow channel 16. In more detail, the herbal sheet 24 is attached to an inner wall 26 of the cartridge 10 defining the central airflow channel 16. The herbal sheet 24 comprises an adhesive layer 30 and a flavor layer 32. The adhesive layer 30 comprises plant seeds 34. In this embodiment, the plant seeds 34 within the adhesive layer 30 belong to a species of jewel orchid. The plant seeds 34 have a generally spherical shape with a diameter of about 0.05 millimeters. The adhesive layer 30 comprises an organic adhesive on the basis of cyanoacrylate.

The flavor layer 32 is formed in a wax type layer, made from tamarind seed gum as main component. During a user experience, aerosol is generated and guided through the central airflow channel 16 of the cartridge 10. The aerosol is mixed with volatile flavor components originating from the plant seed 34 and the flavor layer 32 of the herbal sheet 24. The aerosol and the entrained flavour components from the herbal sheet 24 are carried downstream through the outlet 20 of the airflow channel 16 and are eventually being inhaled by a user.

After consumption of the liquid aerosol-forming substrate 14 stored within the cartridge 10, the cartridge 10 is to be replaced by a new cartridge 10. The consumed cartridge 10 is disposed. Since the cartridge 10 is made from biodegradable material, the used replaceable cartridge 10 does not cause an environmental impact. In addition, the orchid seeds comprised in the herbal sheet 24 within the used replaceable cartridge 10 are germinable and may germinate to contribute to the ecosystem.

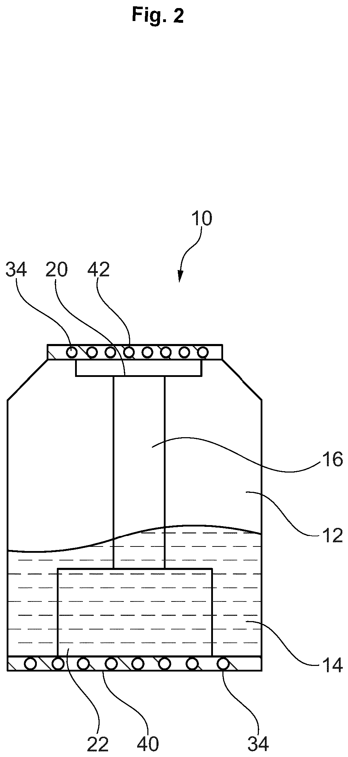

Fig. 2 shows a further cartridge 10 according to the present invention. The construction of the cartridge 10 is largely identical to the construction of the cartridge 10 depicted in Fig.1. The cartridge of Fig. 2 comprises two herbal films. The herbal films are configured as sealing films 40, 42, which prevent unexpected particles or liquid from contaminating the airflow channel 16. Each sealing film 40, 42 is made from biodegradable heat seal adhesives and comprises plant seeds 34. In the depicted embodiment the sealing films 40, 42 are made from paper that is glued to the cartridge 10.

One sealing film 40 is placed on and covers the inlet 22 of the replaceable cartridge 10. The other sealing film 42 is placed on and covers the outlet 20 of the replaceable cartridge 10. The user removes the sealing films 40, 42 before insertion of the cartridge 10 into an aerosol-generating device. After peeling the sealing films 40, 42 from the cartridge 10, the user can put the sealing films 40, 42 into the ground so that the seeds 34 within each of the sealing films 40, 42 germinate to contribute to the ecosystem.

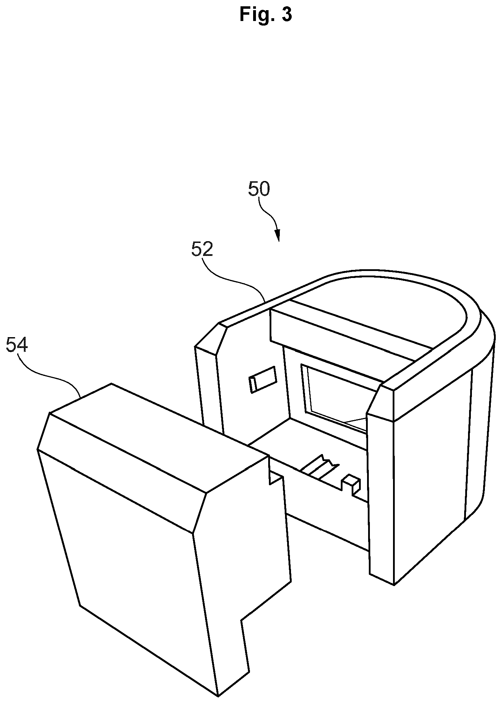

Fig. 3 shows a cartridge assembly 50 that comprises a main piece 52 and a seed holder 54. The main piece 52 and the seed holder 54 are releaseably connectable via a unique engaging structure.

The main piece 52 is configured to receive and engage with the seed holder 54, as depicted in Fig. 3. In this embodiment the seed holder 54 is configured to define a container for holding liquid aerosol-forming substrate and to hold one or more plant seeds 34. When the substrate is consumed the seed holder 54 may be disposed of, while the main piece 52 may be reused together with a new seed holder 54. Thus, in this embodiment the main piece 52 is reusable.

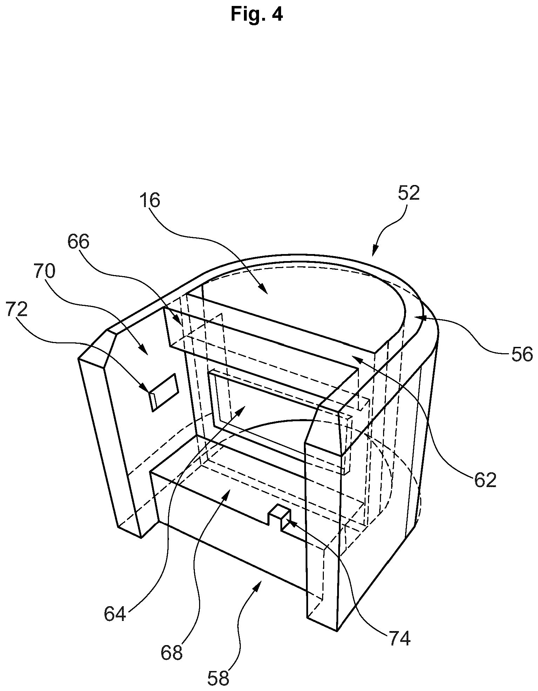

The construction of the main piece 52 is shown in more detail in Fig. 4. The main piece comprises 52 two main sections, an airflow channel section 56 and a docking section 58. The airflow channel section 56 defines an air channel 16 through the cartridge assembly 50. The airflow channel section 56 and the docking section 58 are separated by a wall element 62 having an aperture 64.

The docking section 58 includes a recess 66 for receiving the seed holder 54. The recess 66 is defined by a bottom side 68, the wall element 62, and two lateral sides 70.

The main piece 52 is provided with suitable engaging means to securely retain the seed holder 54 on its engaged position. In the depicted embodiment several engaging means are configured to restrict movement of the seed holder 54 in any direction while attached to the main piece 52. On the lateral sides 70 of the recess 66 of the main piece 52 a spring element 72 is included that pushes towards the recess 66 and that thereby provides a force against a groove 84 of the seed holder 54.

A protrusion 74 is formed at the bottom side of the recess 66. This protrusion 74 cooperates with a corresponding recession 86 in the downwards-facing side of the seed holder 54. In this embodiment, the protrusion 74 and the corresponding recession 86 have a tetragonal shape. Upon assembly of the cartridge the protrusion 74 at the bottom side of the docking section 58 penetrates into the recession 86 in the downwards-facing side 88 of the seed holder 54. Thereby sideward movement of the main piece 53 and the seed holder 54 relative to each other is limited.

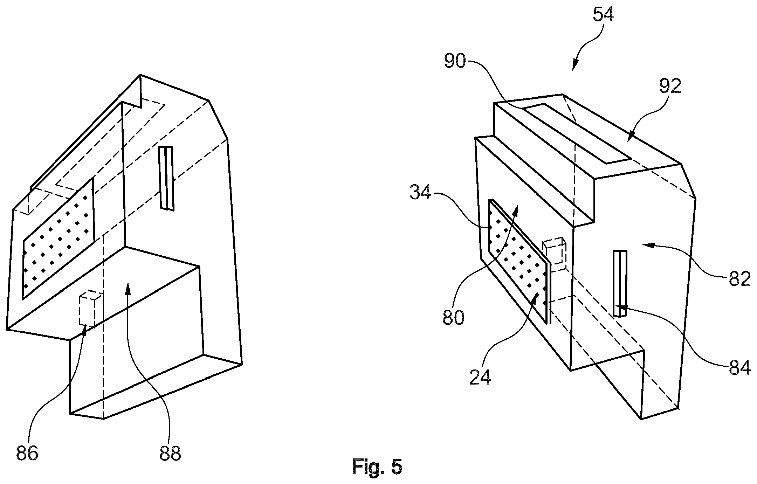

As shown in Figure 5, the seed holder 54 has an L-shape profile along the longitudinal axis of the replaceable cartridge assembly 50. The seed holder 54 is designed to fit into the recess 66 of the docking section 58 of the main piece 52. A front surface 80 of the seed holder 54 includes an arrangement of plant seed 34.

Upon engagement of the main piece 52 and the seed holder 54, front surface 80 of the seed holder 54 closes the aperture 64 in the wall element 62 of the main piece 52 and thereby establishes a closed tubular airflow channel 16 through the cartridge assembly 50.

Moreover, the lateral surfaces 82 of the seed holder 54 include a groove 84. Upon engagement of the seed holder 54 and main piece 52, the spring elements 72 of the main piece 54 bend into the groves 84 at the lateral surfaces 82 of the seed holder 54. In the engaged position the spring elements 72 provide retention between the main piece 52 and the seed holder 54.

A recession 86 is formed into the downwards-facing surface 88 of the seed holder 54. As described above the protrusion 74 of the main piece 52 enters into the recession 86 and limits sideward movement of the main piece 52 and the seed holder 54.

An herbal sheet 24 as described above comprising the plant seeds 34 is arranged on the seed holder 54. During operation of the aerosol-generating device with the replaceable cartridge assembly 50, aerosol is guided through the airflow channel 16 of the cartridge assembly 50. The aerosol contacts the herbal sheet 24 so that the volatile flavors comprised in the herbal sheet 24 are entrained in the aerosol.

The seed holder 54 also comprises a friction arrangement 90 to facilitate the disengagement from the main piece 52. The friction arrangement 90 supports the user fingertip to provide the necessary force to unlock the mechanical engagement features and to release the seed holder 54 from its engaged position. The friction arrangement 90 comprises a series of parallel channel indentations embedded at the top surface 92 of the seed holder 54.

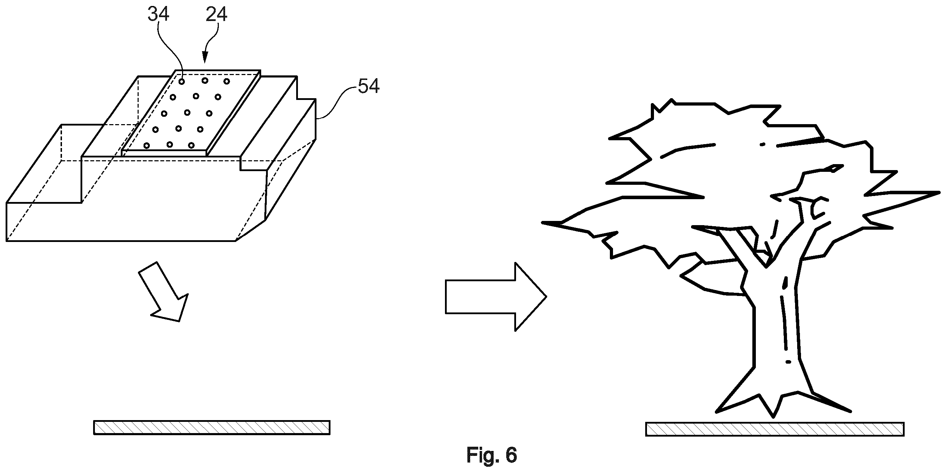

After the liquid aerosol-forming substrate 12 or the flavor layer of the herbal sheet 24 in the replaceable cartridge assembly 50 is completely consumed, the seed holder 54 is separated from the main piece 52 and disposed of. The seed holder 54 can act as a plant pot so that the user can plant the seed holder 54 into the ground. This may help to let the plant seeds 34 within the herbal sheet 24 germinate as illustrated in Fig. 6.

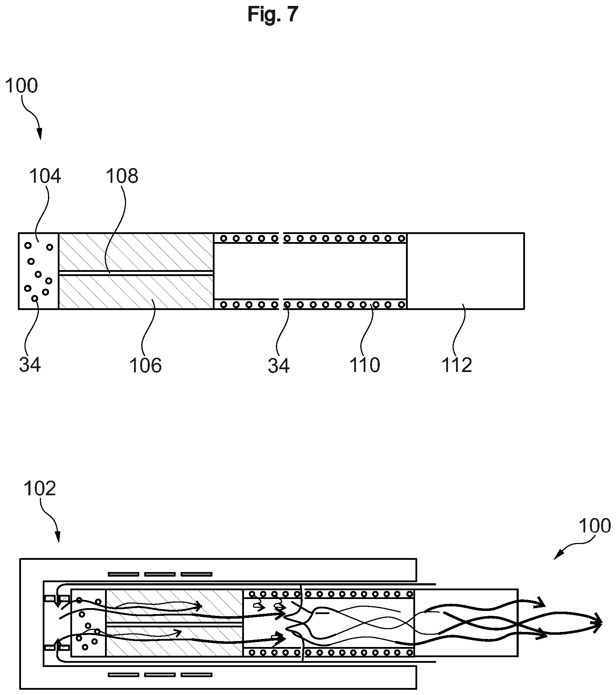

Figure 7 is a cross-sectional view of a further embodiment of the present invention. As depicted in the upper view of Fig. 7, the cartridge is provided in form of an aerosol-generating article 100 that is to be used in an aerosol-generating device 102. In this case the aerosol-generating device is an inductively heated aerosol-generating device 102. The aerosol-generating article 100 comprises four main elements. The first element is a porous front plug 104 made of acetate tow. A plurality of plant seeds 34 are randomly distributed within the front plug 104. The second element is the aerosol-generating substrate 106 with a susceptor heating element 108. The third element is a hollow acetate tube 110. A plurality of plant seeds 34 are randomly distributed within the hollow acetate tube 110. The fourth element is a mouthpiece 112 made of acetate tow.

During a user experience aerosol-generating article 100 is inserted in the inductively heating aerosol-generating device 102. As depicted in the lower view of Fig. 7, the aerosol-generating device 102 is configured to generate a varying magnetic field which induces heat in the susceptor heating element 108. This heat is used to vaporize volatalizible components of the aerosol-forming substrate 106. When a user draws a puff an airflow is provided, which enters the aerosol-generating article 100 at the porous front plug 104 and mixes with the emanated scent of the seeds 34 contained in the porous front plug 104. When passing through the aerosol-forming substrate 106, the air flow is heated and is mixed with vaporized substrate to form a heated flavored aerosol. This heated aerosol is again blended with the scents of the seeds 34 comprised in the hollow acetate tube 110. The aerosol exits the aerosol-generating article 100 at the downstream end of the mouthpiece 112.

## Claims

1. Cartridge (10) for an aerosol-generating device, the cartridge (10) comprising a container configured to hold sensorial media,
wherein the cartridge (10) is made from biodegradable material,
wherein the cartridge (10) further comprises a plant seed (34), and
wherein the plant seed (34) is germinable.

2. Cartridge (10) according to claim 1, wherein the plant seed (34) has flavoring properties.

3. Cartridge (10) according to any preceding claim, wherein the plant seed (34) is selected from one or more of: seeds of sparagales, monocotyledonous flowering plants, including Orchid plants, Cymbidium Orchid, Pimpinella Anisum, Illicium Verum, Foeniculum Vulgaris, Calendula Officinalis, Anthemis Tomentosa, and Anthriscus Cerefolium.

4. Cartridge (10) according to any preceding claim, wherein the biodegradable material is selected from one or more of biodegradable plastics, Polylacticacid (PLA), Polyhydroxyalkanoate (PHA), Polysaccharide derivatives, and Poly (amino acid).

5. Cartridge (10) according to any preceding claim, wherein the plant seed (34) is provided at the outside of the container defined by the cartridge (10).

6. Cartridge (10) according to any preceding claim, wherein the plant seed (34) is provided in an herbal sheet (24).

7. Cartridge (10) according to claim 6, wherein the herbal sheet (24) comprises an adhesive layer (30) and a flavor layer (32).

8. Cartridge (10) according to claim 7, wherein the adhesive layer (30) comprises the plant seed (34).

9. Cartridge (10) according to claims 7 or 8, wherein the flavor layer (32) is formed in a wax type.

10. Cartridge (10) according to any one of claims 7 to 9, wherein the flavor layer (32) is selected from one or more of: tamarind seed gum, locust bean gum from plant seeds, gum arabic and karaya gum from sap, or konjac mannan and soy polysaccharides containing cellulose and agarose (as main components from other plants).

11. Cartridge (10) according to any one of claims 7 to 10, wherein the herbal sheet (24) is provided in the airflow channel (16) defined by the cartridge (10).

12. Cartridge (10) according to any one of claims 7 to 11, wherein the herbal sheet (24) is configured as a sealing layer fixed to the cartridge (10).

13. Cartridge (10) according to the preceding claim, wherein the sealing layer is configured to sealingly close at least one end of the airflow channel (16) defined by the cartridge (10).

14. An aerosol-generating system, comprising an aerosol-generating device and a cartridge (10) according to claims 1 to 13.

## Patentansprüche

1. Patrone (10) für eine Aerosolerzeugungsvorrichtung, wobei die Patrone (10) einen Behälter aufweist, der für ein Aufnehmen von sensorischen Medien ausgelegt ist,
wobei die Patrone (10) aus biologisch abbaubarem Material hergestellt ist,
wobei die Patrone (10) ferner einen Pflanzensamen (34) umfasst, und
wobei der Pflanzensamen (34) keimfähig ist.

2. Patrone (10) nach Anspruch 1, wobei der Pflanzensamen (34) aromatisierende Eigenschaften aufweist.

3. Patrone (10) nach einem beliebigen vorhergehenden Anspruch, wobei der Pflanzensamen (34) ausgewählt ist aus einem oder mehreren von: Samen von spargelartigen, einkeimblättrigen Blütenpflanzen, einschließlich Orchideenpflanzen, Cymbidium-Orchideen, Pimpinella Anisum, Illicium Verum, Foeniculum Vulgaris, Calendula Officinalis, Anthemis Tomentosa und Anthriscus Cerefolium.

4. Patrone (10) nach einem beliebigen vorhergehenden Anspruch, wobei das biologisch abbaubare Material ausgewählt ist aus einem oder mehreren von biologisch abbaubaren Kunststoffen, Polymilchsäure (PLA), Polyhydroxyalkanoaten (PHA), Polysaccharidderivaten und Poly(aminosäuren).

5. Patrone (10) nach einem beliebigen vorhergehenden Anspruch, wobei der Pflanzensamen (34) an der Außenseite des durch die Patrone (10) definierten Behälters vorgesehen ist.

6. Patrone (10) nach einem beliebigen vorhergehenden Anspruch, wobei der Pflanzensamen (34) in einem Kräuterblatt (24) vorgesehen ist.

7. Patrone (10) nach Anspruch 6, wobei das Kräuterblatt (24) eine Klebstoffschicht (30) und eine Aromaschicht (32) aufweist.

8. Patrone (10) nach Anspruch 7, wobei die Klebstoffschicht (30) den Pflanzensamen (34) umfasst.

9. Patrone (10) nach Anspruch 7 oder 8, wobei die Aromaschicht (32) in einer Wachsart gebildet ist.

10. Patrone (10) nach einem der Ansprüche 7 bis 9, wobei die Aromaschicht (32) ausgewählt ist aus einem oder mehreren von: Tamarindensamengummi, Johannisbrotkernmehl aus Pflanzensamen, Gummi arabicum und Karayagummi aus Pflanzensaft oder Konjakmannan und Sojapolysacchariden, die Cellulose und Agarose (als Hauptbestandteile aus anderen Pflanzen) enthalten.

11. Patrone (10) nach einem der Ansprüche 7 bis 10, wobei das Kräuterblatt (24) in dem Luftstromkanal (16) vorgesehen ist, der durch die Patrone (10) definiert ist.

12. Patrone (10) nach einem der Ansprüche 7 bis 11, wobei das Kräuterblatt (24) als eine an der Patrone (10) befestigte Dichtungsschicht ausgelegt ist.

13. Patrone (10) nach dem vorhergehenden Anspruch, wobei die Dichtungsschicht dazu eingerichtet ist, wenigstens ein Ende des Luftstromkanals (16), der durch die Patrone (10) definiert ist, dichtend zu verschließen.

14. Aerosolerzeugungssystem, aufweisend eine Aerosolerzeugungsvorrichtung und eine Patrone (10) nach den Ansprüchen 1 bis 13.

## Revendications

1. Cartouche (10) pour un dispositif de génération **d'aérosol,** la cartouche (10) comprenant un récipient configuré pour contenir un milieu sensoriel,
dans laquelle la cartouche (10) est composée de matériau biodégradable,
dans laquelle la cartouche (10) comprend en outre une graine végétale (34), et
dans laquelle la graine végétale (34) est capable de germer.

2. Cartouche (10) selon la revendication **1,** dans laquelle la graine végétale (34) a des propriétés aromatisantes.

3. Cartouche (10) selon l'une quelconque des revendications précédentes, dans laquelle la graine végétale (34) est choisie à partir d'un ou plusieurs des éléments suivants : des graines de sparagales, de plantes à fleurs monocotylédones, y compris les plantes Orchidées, Orchidées Cymbidium, Pimpinella Anisum, Illicium Verum, Foeniculum Vulgaris, Calendula Officinalis, Anthemis Tomentosa et Anthristhium Cecusolium.

4. Cartouche (10) selon l'une quelconque des revendications précédentes, dans laquelle le matériau biodégradable est choisi à partir **d'un** ou plusieurs parmi plastiques biodégradables, acide polylactique (PLA), polyhydroxyalcanoate (PHA), dérivés de polysaccharide et poly(aminoacide).

5. Cartouche (10) selon l'une quelconque des revendications précédentes, dans laquelle la graine végétale (34) est prévue à l'extérieur du récipient défini par la cartouche (10).

6. Cartouche (10) selon l'une quelconque des revendications précédentes, dans laquelle la graine végétale (34) est prévue dans une feuille à base d'herbes (24).

7. Cartouche (10) selon la revendication 6, dans laquelle la feuille à base d'herbes (24) comprend une couche adhésive (30) et une couche d'arôme (32).

8. Cartouche (10) selon la revendication 7, dans laquelle la couche adhésive (30) comprend la graine végétale (34).

9. Cartouche (10) selon la revendication 7 ou 8, dans laquelle la couche d'arôme (32) est formée dans un type de cire.

10. Cartouche (10) selon l'une quelconque des revendications 7 à 9, dans laquelle la couche d'arôme (32) est choisie à partir d'une ou plusieurs parmi : gomme de graines de tamarin, gomme de caroube provenant de graines de plantes, gomme arabique et gomme de karaya provenant de sève, ou mannane de konjac et polysaccharides de soja contenant de la cellulose et de l'agarose (en tant que composants principaux d'autres plantes).

11. Cartouche (10) selon l'une quelconque des revendications 7 à 10, dans laquelle la feuille à base d'herbes (24) est prévue dans le canal d'écoulement d'air (16) défini par la cartouche (10).

12. Cartouche (10) selon l'une quelconque des revendications 7 à 11, dans laquelle la feuille à base d'herbes (24) est configurée comme une couche d'étanchéité fixée à la cartouche (10).

13. Cartouche (10) selon la revendication précédente, dans laquelle la couche d'étanchéité est configurée pour fermer de manière étanche au moins une extrémité du canal d'écoulement d'air (16) défini par la cartouche (10).

14. Système de génération d'aérosol comprenant un dispositif de génération d'aérosol et une cartouche (10) selon les revendications 1 à 13.
